# EUROPEAN PATENT APPLICATION

(11) **EP 4 613 413 A2**
(43) Date of publication of application: **10.09.2025**
(21) Application number: 25162222.1
(22) Date of filing: 07.03.2025
(51) Int. Cl.: B23K 9/10

(54) **HYBRID ARC WELDING SYSTEM**

(30) Priority: 08.03.2024 US 202418599587
(71) Applicant: Lincoln Global, Inc., Cleveland, OH 44117 (US)
(72) Inventor: VANDERBYL, Bernard T., Toronto M6P 2N5 (CA)
(74) Representative: Hoyng Rokh Monegier B.V.

(57) **Abstract**

A hybrid arc welding system (10) includes a waveform generator comprising a switching type power converter (34). A welding torch (38) is operatively connected to the switching type power converter (34) to receive electrical energy and produce an electric arc (36) for welding. The system includes an engine-generator (30) and a rectifier (32) connected to receive an output of the engine-generator (30) and supply electrical energy to the switching type power converter (34). A battery (42) is connected to receive an output of the rectifier (32) and supply electrical energy to the switching type power converter (34). A bidirectional battery charge-discharge circuit (44) is connected between the rectifier (32) and the switching type power converter (34) and comprises a first and second electronic switches (58, 60). A controller (54, 66) is operatively connected to the bidirectional battery charge-discharge circuit (44) to control operations of the first and second electronic switches (58, 60) such that the bidirectional battery charge-discharge circuit (44) is configured to selectively conduct charging current from the rectifier (32) to the battery (42) and selectively conduct welding current from the battery (42) to the switching type power converter (34).

## Description

### BACKGROUND OF THE INVENTION

### Field of the Invention

The present invention relates to a hybrid arc welding system having both an engine driven generator and a battery for supplying welding current to a welding torch.

### Description of Related Art

Engine driven welders include an internal combustion engine, such as a diesel, gasoline or liquefied petroleum gas (LPG) engine. The engine drives a generator, and the generator supplies electrical power to a welding power supply that outputs a welding current and voltage. A hybrid engine welder includes a storage battery that can supply additional electrical power to the welding power supply to generate the welding current and voltage. The storage battery is charged by the generator when other current demand from the generator is low. The charging circuitry for the battery adds costs and space requirements to the engine driven welder and it would be desirable to minimize the number of components and the cost of such charging circuitry. A hybrid welding system is discussed in U.S. Patent No. 10,166,624, titled "Hybrid Welding Supply", and issued on January 1, 2019, the entirety of which is incorporated by reference herein.

### BRIEF SUMMARY OF THE INVENTION

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a hybrid arc welding system. The hybrid arc welding system includes a welding waveform generator comprising a switching type power converter. A welding torch is operatively connected to the switching type power converter to receive electrical energy from the switching type power converter and produce an electric arc for welding. The system further includes an engine-generator and a rectifier connected to receive an output of the engine-generator and supply electrical energy to the switching type power converter. A battery is connected to receive an output of the rectifier and supply electrical energy to the switching type power converter. A bidirectional battery charge-discharge circuit is connected between the rectifier and the switching type power converter. The bidirectional battery charge-discharge circuit comprises a first electronic switch and a second electronic switch. A controller is operatively connected to the bidirectional battery charge-discharge circuit to control operations of the first electronic switch and the second electronic switch such that the bidirectional battery charge-discharge circuit is configured to selectively conduct charging current from the rectifier to the battery and selectively conduct welding current from the battery to the switching type power converter.

In accordance with another aspect of the present invention, provided is a hybrid arc welding system. The hybrid arc welding system includes a welding waveform generator comprising a switching type power converter. A welding torch is operatively connected to the switching type power converter to receive electrical energy from the switching type power converter and produce an electric arc for welding. The system further includes an engine-generator and a rectifier connected to receive an output of the engine-generator and supply electrical energy to the switching type power converter. A battery is connected to receive an output of the rectifier and supply electrical energy to the switching type power converter. A bidirectional buck-boost circuit is connected between the rectifier and the switching type power converter. The bidirectional buck-boost circuit comprises a battery charging switch without a separate diode connected in parallel with the battery charging switch, and a battery discharging switch without a separate diode connected in parallel with the battery discharging switch. A controller is operatively connected to the bidirectional buck-boost circuit to control operations of the battery charging switch and the battery discharging switch such that the bidirectional buck-boost circuit is configured to selectively conduct charging current from the rectifier to the battery and selectively conduct welding current from the battery to the switching type power converter.

In accordance with another aspect of the present invention, provided is a hybrid arc welding system. The hybrid arc welding system includes a welding waveform generator comprising a switching type power converter. A welding torch is operatively connected to the switching type power converter to receive electrical energy from the switching type power converter and produce an electric arc for welding. The system further includes an engine-generator and a rectifier connected to receive an output of the engine-generator and supply electrical energy to the switching type power converter over a DC bus. A filtering capacitor is connected across the DC bus at an output of the rectifier. A battery is connected to receive an output of the rectifier and supply electrical energy to the switching type power converter. A bidirectional buck-boost circuit comprises a first electronic switch, and an inductor electrically connected between the battery and the first electronic switch. The first electronic switch is electrically connected between the inductor and a positive terminal of the DC bus. The bidirectional buck-boost circuit also includes a second electronic switch electrically connected between a negative terminal of the DC bus and both of the inductor and the first electronic switch. A controller is operatively connected to the bidirectional buck-boost circuit to control operations of the first electronic switch and the second electronic switch such that the bidirectional buck-boost circuit is configured to selectively conduct charging current from the rectifier to the battery and selectively conduct welding current from the battery to the switching type power converter.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 is a perspective view of an engine driven welder hybrid arc welding system;
FIG. 2 is a schematic diagram of an engine driven welder hybrid arc welding system;
FIG. 3 is a schematic diagram of an engine driven welder hybrid arc welding system;
FIG. 4 is a schematic diagram of an engine driven welder hybrid arc welding system;
FIG. 5 is a schematic diagram of an engine driven welder hybrid arc welding system;
FIG. 6 is a schematic diagram of an engine driven welder hybrid arc welding system; and
FIG. 7 illustrates an example controller.

### DETAILED DESCRIPTION OF THE INVENTION

The present invention relates to a hybrid arc welding system having both an engine driven generator and a battery for supplying welding current to a welding torch. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

While embodiments of the present invention described herein are discussed in the context of a gas metal arc welding (GMAW) system, other embodiments of the invention are not limited thereto. For example, embodiments can be utilized in shielded metal arc welding (SAW), flux-cored arc welding (FCAW), metal-cored arc welding (MCAW), gas tungsten arc welding (GTAW) as well as other similar types of welding operations. Further, embodiments of the present invention can be used in manual, semiautomatic and robotic welding operations. Embodiments of the present invention can also be used in metal deposition operations that are similar to welding, such as additive manufacturing, hardfacing, and cladding. As used herein, the term "welding" is intended to encompass all of these technologies as they all involve material deposition to either join or build up a workpiece. Therefore, in the interests of efficiency, the term "welding" is used below in the description of exemplary embodiments, but is intended to include all of these material deposition operations, whether or not joining of multiple workpieces occurs.

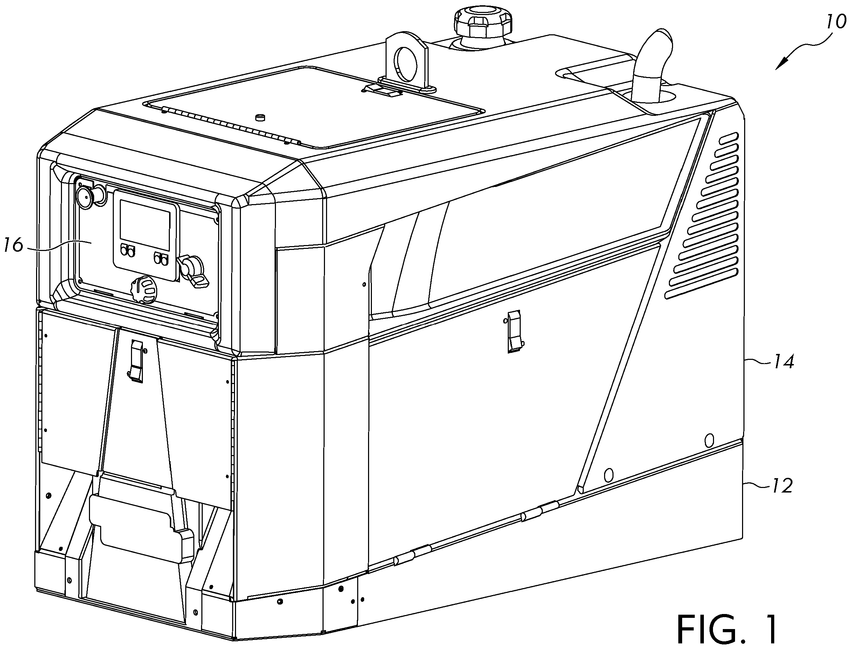

Figure 1 is an outer perspective view of an example engine driven hybrid arc welding machine 10 or system. The welding machine 10 can include a base 12 that is part of a chassis structure for the welding machine, and an outer case or enclosure 14. A user interface 16 for controlling the operation of the hybrid arc welding machine 10 is located on the front side of the outer case 14. Example welding processes that can be performed by the welding machine 10 include shielded metal arc welding (SMAW), gas metal arc welding (GMAW), flux-cored arc welding (FCAW), gas tungsten arc welding (GTAW), and gouging. Within the outer case 14 is an internal combustion engine that drives a generator, a hybrid battery, and a welding waveform generator (e.g., welding power circuitry) having a switching type power converter, such as an inverter or a chopper.

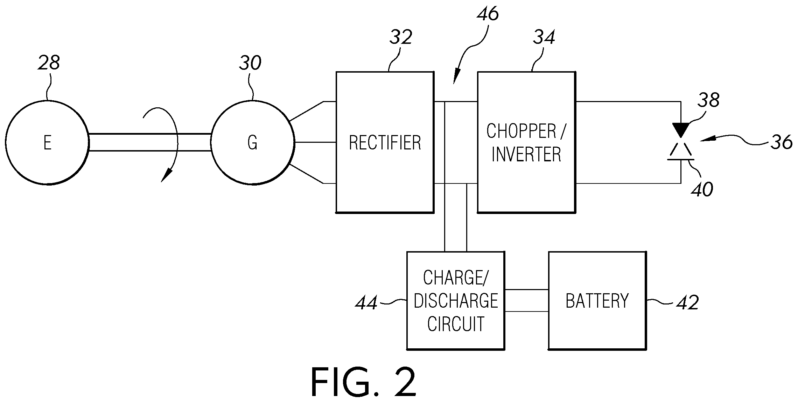

Figure 2 is a schematic diagram of a hybrid arc welding system, which is an engine driven welding system having a battery to provide additional welding energy as needed. The welding system includes a generator 30 driven by an engine 28 thereby forming an engine-generator. Example engines include diesel engines, gasoline engines, LP gas engines, and the like. The generator 30 generates electrical energy for powering a welding power supply or welding waveform generator having a switching type power converter 34 (e.g., a chopper or inverter). The generator 30 can be a synchronous 3-phase alternator. However, the generator need not be a synchronous 3-phase alternator. For example, the generator could be a single phase alternator or a DC generator if desired.

The output of the generator 30 is rectified to DC by a rectifier 32. The rectifier 32 supplies DC power to a DC bus 46 that conducts electricity to the switching type power converter 34. Thus, the engine-driven generator 30 is operatively connected to the welding waveform generator having the switching type power converter 34 (e.g., a chopper or inverter), and supplies electrical energy to the welding waveform generator to generate a welding arc 36. The switching type power converter 34 converts the electrical energy from the generator 30 to a welding output for generating an electric welding arc 36 between a torch 38 and workpiece(s) 40 to be welded. Thus, the welding torch 38 is operatively connected to the switching type power converter 34 to receive electrical energy from the switching type power converter and produce the electric arc 36 for welding. The switching type power converter 34 can include a chopper or inverter circuitry for generating the welding output, control circuitry for controlling the chopper or inverter circuitry, and may include a transformer and one or more rectifiers. The specific construction of welding waveform generators or welding power supplies having switching type power converters such as choppers or inverters is well known to one of ordinary skill in the art and will not be discussed in detail herein.

The hybrid arc welding system also includes a battery 42 (e.g., a lithium ion battery) that is connected to the DC bus 46 through a charge-discharge circuit 44. The battery 42 can be a single battery or a bank of batteries as is known in the art. The battery 42 is connected to the DC bus 46 and to the charge-discharge circuit 44 to receive an output of the rectifier 32 for charging the battery and to supply electrical energy to the switching type power converter 34. The battery 42 receives charging/recharging power from the generator 30 and rectifier 32 through the charge-discharge circuit 44. The battery 42 also supplies welding current to the switching type power converter 34 through the charge-discharge circuit 44. The battery 42 can supplement the engine 28 and generator 30 when supplying power for welding and other auxiliary operations, or the battery can supply power for welding and/or auxiliary operations by itself. The battery 42 is connected such that it provides power to the torch 38 and/or an auxiliary output independently of the generator 30 or with the generator. In this sense, power can be provided by at least one of the engine-driven generator 30 and the battery 42 such that power sufficient to perform an operation may be provided by generator or battery independently, or the battery may supplement power from the generator.

In conventional hybrid arc welding systems, the charge/discharge circuit 44 is not bidirectional. For example, the charge/discharge circuit 44 can include separate buck and boost subcircuits to charge the battery 42 and discharge the battery, respectively. Alternatively and desirably, the charge-discharge circuit 44 can be a bidirectional battery charge-discharge circuit (e.g., a bidirectional buck-boost circuit) that combines the buck and boost subcircuits to minimize the number of components in the charge/discharge circuit, thereby reducing the cost of the system and the space footprint of the charge/discharge circuit.

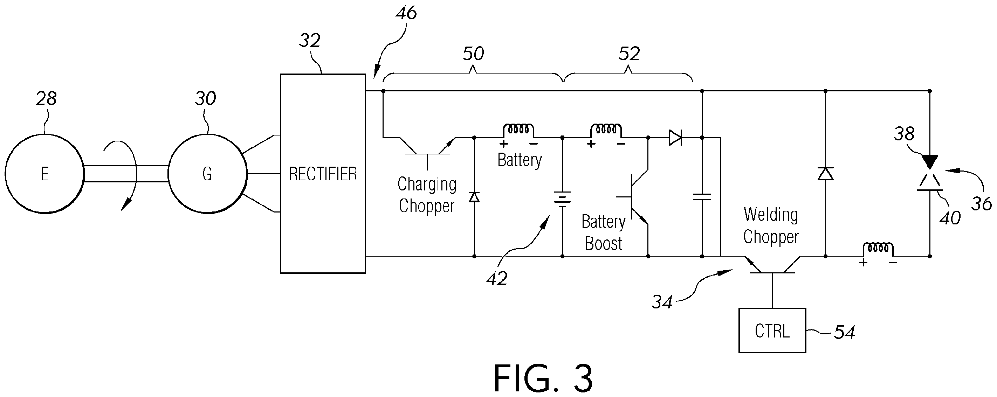

Figure 3 is a schematic diagram of a hybrid arc welding system without a bidirectional charge-discharge circuit. Hybrid battery 42 is charged from the DC bus 46 through a buck subcircuit 50. The buck subcircuit 50 can include an electronic switch, such as a transistor switch, and a diode and inductor as shown. The electronic switch in the buck subcircuit 50 operates to charge the battery 42 at a lower voltage than the DC bus 46 when the engine 28 is running and there is sufficient spare capacity from the generator 30 (e.g., no welding is occurring). The battery 42 is discharged to supply welding power to the DC bus 46 through a boost subcircuit 52. The boost subcircuit 52 can include a further electronic switch and an inductor and diode as shown. The electronic switch in the boost subcircuit 52 operates to discharge the battery 42 and raise its voltage to the DC bus 46 voltage. The welding system can include one or more controllers 54. The controller 54 controls operations of the switching type power converter (shown in Fig. 3 as a welding chopper) to generate a desired welding waveform, using pulse width modulation control for example. The controller 54 can also control operations of the buck and boost subcircuit 50, 52 electronic switches, or there can be a separate dedicated controller for the subcircuits. In either case, the operations of the charge-discharge circuit can be controlled based on the charge level of the battery 42, the load on the engine-generator, the desired amount of welding current, etc., which can be monitored and/or determined by the controller 54.

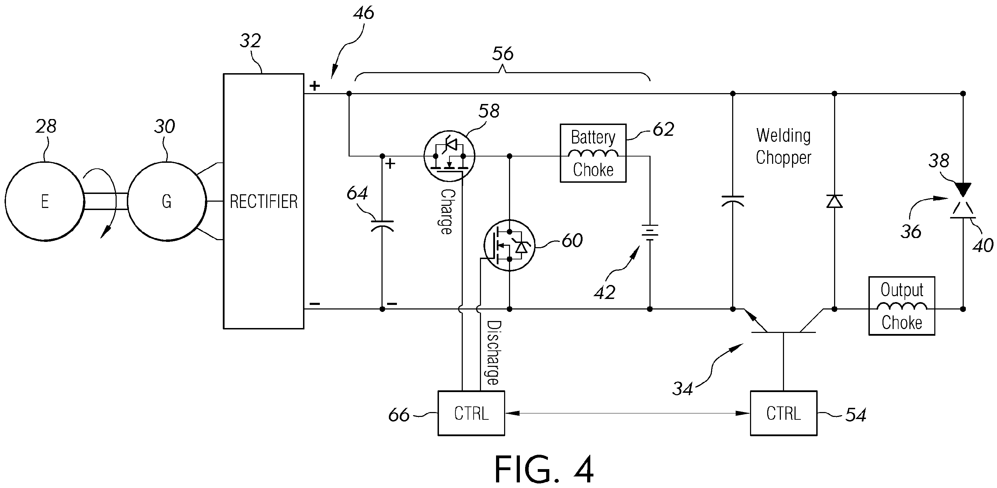

Figure 4 is a schematic diagram of a hybrid arc welding system having a bidirectional charge-discharge circuit or bidirectional buck-boost circuit 56. In Fig. 3, charging and discharging of the battery 42 is achieved via separate subcircuits with separate inductors/chokes, electronic switches, and current paths. However, the bidirectional buck-boost circuit 56 in Fig. 4 has a combined current path utilizing battery charging and discharging electronic switches 58, 60 and a single inductor 62. The battery charging switch 58 is directly connected to the DC bus 46 (e.g., the positive rail of the DC bus), the filter capacitor 64, and the battery discharging switch 60. The battery discharging switch 60 is directly connected to the battery charging switch 58, inductor 62 (battery choke), and the DC bus 46 (e.g., the negative rail of the DC bus). The inductor 62 is electrically connected between the battery 42 and the connection of the charging switch 58 to the discharging switch 60. Compared to the circuitry in Fig. 3, the bidirectional charge-discharge circuit or bidirectional buck boost circuit 56 in Fig. 4 has fewer components that take up less space. Moreover, efficiency can be improved by employing synchronous rectification using the electronic switches 58, 60.

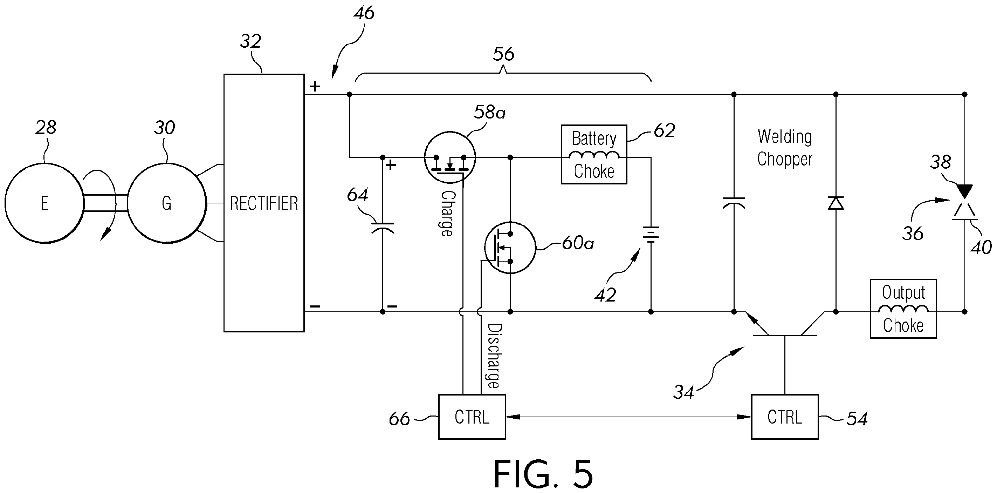

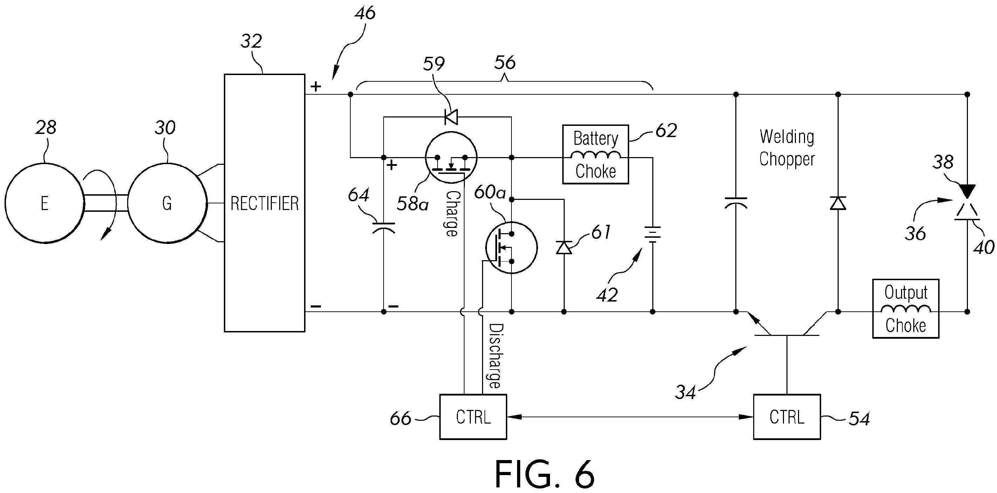

In the example embodiment shown in Fig. 4, the battery charging and discharging switches 58, 60 can be electronic switches, such as transistor switches. For example, the electronic switches could be power transistors, IGBTs, MOSFETs, etc. Each electronic switch could have a separate diode electrically connected in parallel with the electronic switch as shown in Fig. 6. However, if MOSFETs are used as shown in Figs. 4 and 5, synchronous rectification can be performed utilizing the intrinsic body diodes to improve efficiency. Thus, if desired, the battery charging and discharging switches can lack the respective separate diodes connected in parallel that are shown in Fig. 6. The intrinsic body diodes of the battery charging and discharging switches 58, 60 are shown in Fig. 4 and are not shown in Fig. 5.

With reference to Fig. 4, the bidirectional buck-boost circuit 56 is connected to the DC bus 46 between the rectifier 32 and the switching type power converter 34. To charge the battery 42 from the generator 30, the gate of the battery charging switch 58 is controlled (e.g., via pulse width modulation or PWM, pulse frequency modulation, and the like) to create a charging current flow to the battery. If synchronous rectification is not being performed and the battery discharging switch 60 has a separate parallel diode, then the battery discharging switch can remain off during battery charging. However, if synchronous rectification is being performed, then the battery discharging switch 60 will be activated via its gate when the battery charging switch 58 is turned off during PWM and after a deadband (to prevent both switches being activated simultaneously).

To discharge the battery 42 to supply power to the DC bus 46, the gate of the battery discharging switch 60 is controlled (e.g., via PWM) to create a discharging current flow out of the battery. If synchronous rectification is not being performed and the battery charging switch 58 has a separate parallel diode, then the battery charging switch can remain off during battery discharging. However, if synchronous rectification is being performed, then the battery charging switch 58 will be activated via its gate when the battery discharging switch 60 is turned off during PWM and after a deadband (to prevent both switches being activated simultaneously).

It is to be appreciated that the duty cycles of the battery charging and discharging switches 58, 60 control the energy to the inductor 62 or battery choke. When charging the battery 42, a shorter PWM duty cycle for the battery charging switch 58 will provide a greater decrease in voltage from the DC bus 46. When discharging the battery 42, a longer PWM duty cycle for the battery discharging switch 60 will provide a greater boost in voltage from the battery to the DC bus 46.

The bidirectional buck-boost circuit 56 can include a filtering capacitor 64 connected across the output of the rectifier 32 that prevents surges from over voltage conditions on the battery charging and discharging switches 58, 60 and provides extra filtering from AC.

As noted above, the welding system can include one or more controllers. The controller 54 controls operations of the switching type power converter 34 (shown in Fig. 4 as a welding chopper but it could be an inverter) to generate a desired welding waveform, using PWM control for example. The controller 54 can also control operations of the bidirectional charge-discharge circuit or bidirectional buck-boost circuit 56, in particular the operations of the charge and discharge electronic switches 58, 60 in the charge-discharge circuit. However, in the example embodiment of Fig. 4, the welding system includes a separate controller 66 for controlling the operations of the charge and discharge electronic switches 58, 60 of the bidirectional charge-discharge circuit or bidirectional buck-boost circuit 56. The controller 66 is operatively connected to the bidirectional battery charge-discharge circuit or bidirectional buck-boost circuit to control operations of the charge and discharge electronic switches 58, 60 such that the bidirectional battery charge-discharge circuit or bidirectional buck-boost circuit is configured to selectively conduct charging current from the rectifier 32 to the battery 42 and selectively conduct welding current from the battery to the switching type power converter 34. The controller 66 for the bidirectional buck-boost circuit 56 can provide PWM and synchronous rectification signals to the charge and discharge electronic switches 58, 60 to provide battery 42 charging and discharging current at appropriate voltage levels. The operations of the bidirectional charge-discharge circuit or bidirectional buck-boost circuit 56 can be controlled based on the charge level of the battery 42, the load on the engine-generator, the desired amount of welding current, etc., which can be monitored and/or determined by one or both of the controllers 54, 66. In certain embodiments, the controller 54 for the switching type power converter 34 can monitor parameters such as engine RPM, welding voltage level, welding current level, DC bus voltage level, etc. and communicate power or PWM adjustments to the controller 66 for the bidirectional buck-boost circuit 56 to increase or reduce charging current and/or discharge current from the hybrid battery 42. For example, the controllers 54, 66 can communicate bidirectionally via a CAN bus for example. The controller 54 for the switching type power converter 34 can instruct the controller 66 for the bidirectional buck-boost circuit 56 to increase and/or decrease power to or from the hybrid battery 42, and the controller for the bidirectional buck-boost circuit 56 can control the operation and synchronous rectification of the charge and discharge electronic switches 58, 60 accordingly. PWM adjustments for the charge and discharge electronic switches 58, 60 can occur dynamically during operation of the generator 30 and/or during a welding operation.

Figure 5 is a schematic diagram of a hybrid arc welding system having a bidirectional charge-discharge circuit or bidirectional buck-boost circuit 56 in which the charge and discharge electronic switches 58a, 60a are MOSFETs that lack separate diodes connected in parallel. The controller 66 for the bidirectional buck-boost circuit 56 controls the operation of the switches 58a, 60a to perform synchronous rectification utilizing the intrinsic body diodes (not shown) of the MOSFET switches. The switches 58a, 60a are operated together during battery charging and discharging with deadbands between activation of the switches to prevent both switches being activated simultaneously. Figure 6 is a schematic diagram of a hybrid arc welding system having a bidirectional charge-discharge circuit or bidirectional buck-boost circuit 56 in which the charge and discharge electronic switches 58a, 60a are MOSFETs that include separate diodes 59, 61 (separate from the intrinsic body diodes) connected in parallel with the switches.

The hybrid arc welding systems discussed herein can include auxiliary outputs for powering equipment such as lights, grinders, various plug-in hand tools, etc. In certain embodiments, the hybrid arc welding system can include an inverter connected to the hybrid battery through a contactor to provide auxiliary power output.

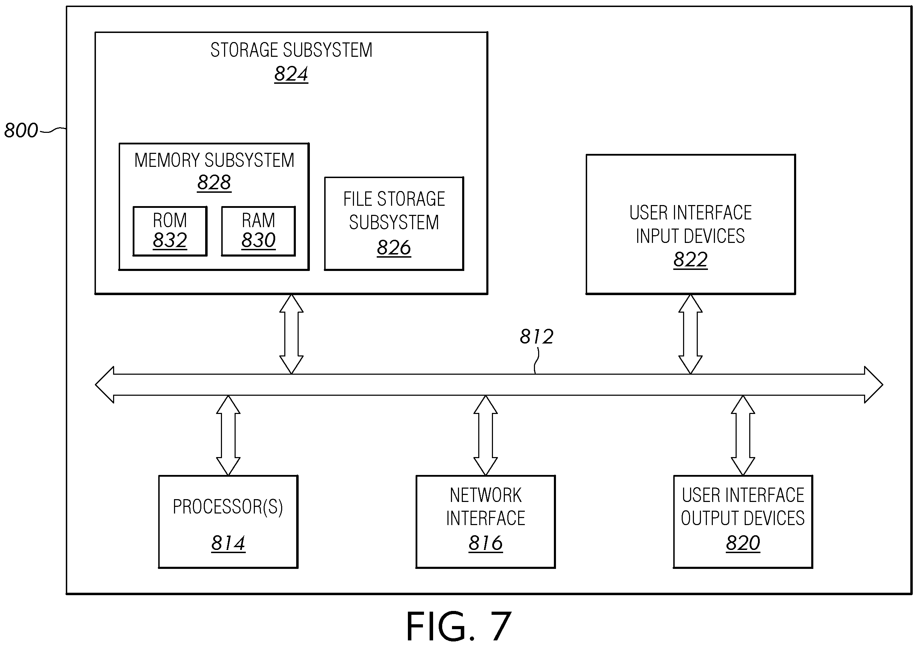

Figure 7 illustrates an example embodiment of controller 800 for use in the example hybrid arc welding system discussed above (e.g., a controller for a switching type power converter and/or a control for hybrid battery charge-discharge circuitry.) The example controller 800 includes at least one processor 814 which communicates with a number of peripheral devices via bus subsystem 812. These peripheral devices may include a storage subsystem 824, including, for example, a memory subsystem 828 and a file storage subsystem 826, user interface input devices 822, user interface output devices 820, and a network interface subsystem 816. The input and output devices allow user interaction with the controller 800. Network interface subsystem 816 provides an interface to outside networks and can be coupled to corresponding interface devices in other computer systems or programmable devices.

User interface input devices 822 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 800 or onto a communication network.

User interface output devices 820 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 800 to the user or to another machine or computer system.

Storage subsystem 824 stores programming and data constructs that provide the functionality of some or all of the operations described herein. For example, the storage subsystem 824 may include programming instructions to allow the controller 800 to execute the PID routine and the consumable identification described above.

Firmware or software modules having the programming instructions are generally executed by processor 814 alone or in combination with other processors. Memory subsystem 828 used in the storage subsystem 824 can include a number of memories including a main random access memory (RAM) 830 for storage of instructions and data during program execution and a read only memory (ROM) 832 in which fixed instructions are stored. A file storage subsystem 826 can provide persistent storage for program and data files, and may include a hard disk drive, a floppy disk drive along with associated removable media, a CD-ROM drive, an optical drive, or removable media cartridges. The modules implementing the functionality of certain embodiments may be stored by file storage subsystem 826 in the storage subsystem 824, or in other machines accessible by the processor(s) 814.

Bus subsystem 812 provides a mechanism for letting the various components and subsystems of the controller 800 communicate with each other as intended. Although bus subsystem 812 is shown schematically as a single bus, alternative embodiments of the bus subsystem may use multiple buses.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A hybrid arc welding system (10), comprising:
a welding waveform generator comprising a switching type power converter (34);
a welding torch (38) operatively connected to the switching type power converter to receive electrical energy from the switching type power converter and produce an electric arc for welding;
an engine-generator (30);
a rectifier (32) connected to receive an output of the engine-generator and supply electrical energy to the switching type power converter;
a battery (42) connected to receive an output of the rectifier and supply electrical energy to the switching type power converter;
a bidirectional battery charge-discharge circuit (44) connected between the rectifier and the switching type power converter, wherein the bidirectional battery charge-discharge circuit comprises a first electronic switch and a second electronic switch; and
a controller (54, 66) operatively connected to the bidirectional battery charge-discharge circuit to control operations of the first electronic switch and the second electronic switch such that the bidirectional battery charge-discharge circuit is configured to selectively conduct charging current from the rectifier to the battery and selectively conduct welding current from the battery to the switching type power converter.

2. The hybrid arc welding system of claim 1, wherein the first electronic switch and the second electronic switch are MOSFET switches, wherein preferably the controller is arranged to control operations of the first electronic switch and the second electronic switch to perform synchronous rectification.

3. The hybrid arc welding system of any of the previous claims, further comprising a first diode (59) electrically connected in parallel with the first electronic switch, and a second diode (61) electrically connected in parallel with the second electronic switch.

4. The hybrid arc welding system of any of the previous claims, further comprising a filtering capacitor (64) connected across the output of the rectifier (32).

5. The hybrid arc welding system of claim 4, wherein the bidirectional battery charge-discharge circuit further comprises an inductor (62) electrically connected between the battery and a connection of the first electronic switch to the second electronic switch.

6. The hybrid arc welding system of any of the previous claims, wherein the first electronic switch is directly connected to the second electronic switch.

7. A hybrid arc welding system (10), comprising:
a welding waveform generator comprising a switching type power converter (34);
a welding torch (38) operatively connected to the switching type power converter to receive electrical energy from the switching type power converter and produce an electric arc for welding;
an engine-generator (30);
a rectifier (32) connected to receive an output of the engine-generator and supply electrical energy to the switching type power converter;
a battery (42) connected to receive an output of the rectifier and supply electrical energy to the switching type power converter;
a bidirectional buck-boost circuit (56) connected between the rectifier and the switching type power converter, wherein the bidirectional buck-boost circuit comprises a battery charging switch (58) without a separate diode connected in parallel with the battery charging switch, and a battery discharging switch (60) without a separate diode connected in parallel with the battery discharging switch; and
a controller (54, 66) operatively connected to the bidirectional buck-boost circuit to control operations of the battery charging switch and the battery discharging switch such that the bidirectional buck-boost circuit is configured to selectively conduct charging current from the rectifier to the battery and selectively conduct welding current from the battery to the switching type power converter.

8. The hybrid arc welding system of claim of claim 7, wherein the battery charging switch and the battery discharging switch are MOSFET switches.

9. The hybrid arc welding system of claim of claim 7 or 8, wherein the controller controls operations of the battery charging switch and the battery discharging switch to perform synchronous rectification.

10. The hybrid arc welding system of any of the claims 7-9, further comprising a filtering capacitor connected across the output of the rectifier, wherein preferably the bidirectional buck-boost circuit further comprises an inductor electrically connected between the battery and a connection of the battery charging switch to the battery discharging switch.

11. The hybrid arc welding system of any of the claims 7-10, wherein the battery charging switch is directly connected to the battery discharging switch.

12. A hybrid arc welding system (10), comprising:
a welding waveform generator comprising a switching type power converter (34);
a welding torch (38) operatively connected to the switching type power converter to receive electrical energy from the switching type power converter and produce an electric arc for welding;
an engine-generator (30);
a rectifier (32) connected to receive an output of the engine-generator and supply electrical energy to the switching type power converter over a DC bus (46);
a filtering capacitor (64) connected across the DC bus at an output of the rectifier;
a battery (42) connected to receive an output of the rectifier and supply electrical energy to the switching type power converter;
a bidirectional buck-boost circuit (56) comprising:
a first electronic switch (58);
an inductor (62) electrically connected between the battery and the first electronic switch, wherein the first electronic switch is electrically connected between the inductor and a positive terminal of the DC bus, and
a second electronic switch (60) electrically connected between a negative terminal of the DC bus and both of the inductor and the first electronic switch, and
a controller (54,66) operatively connected to the bidirectional buck-boost circuit to control operations of the first electronic switch and the second electronic switch such that the bidirectional buck-boost circuit is configured to selectively conduct charging current from the rectifier to the battery and selectively conduct welding current from the battery to the switching type power converter.

13. The hybrid arc welding system of claim 12, wherein the first electronic switch and the second electronic switch are MOSFET switches.

14. The hybrid arc welding system of claim 13, wherein the controller controls operations of the first electronic switch and the second electronic switch to perform synchronous rectification.

15. The hybrid arc welding system of any of the claims 12-14, further comprising a first diode (59) electrically connected in parallel with the first electronic switch, and a second diode (61) electrically connected in parallel with the second electronic switch.
